# EUROPÄISCHE PATENTANMELDUNG

(11) **EP 2 508 320 A1**
(43) Veröffentlichungstag der Anmeldung: **10.10.2012**
(21) Anmeldenummer: 12162066.0
(22) Anmeldetag: 29.03.2012
(51) Int. Cl.: B29B 13/02, B27D 5/00, B27G 11/02

(54) **Haftmittelzufuhrvorrichtung**

(30) Priorität: 06.04.2011 DE 202011004910 U
(71) Anmelder: Brandt Kantentechnik GmbH, 32657 Lemgo (DE)
(72) Erfinder: Franz, Karl-Bernhard, 32657 Lemgo (DE); Garnjost, Ralf, 32791 Lage (DE)
(74) Vertreter: HOFFMANN EITLE

(57) **Zusammenfassung**

Haftmittelzufuhrvorrichtung (10) zum Versorgen einer Bearbeitungsmaschine mit Haftmittel, umfassend: einen Haftmittelvorratsbehälter (12) zum Bevorraten von Haftmittel, einer Haftmittelaufschmelzeinrichtung (14) zum Aufschmelzen von in dem Haftmittelvorratsbehälter bevorratetem Haftmittel, wobei die Haftmittelaufschmelzeinrichtung (14) mindestens ein Heizelement (16) aufweist, dadurch gekennzeichnet, dass die Haftmittelaufschmelzeinrichtung (14) in dem Haftmittel angeordnet ist und, dass das mindestens eine Heizelement zumindest abschnittsweise aus einem keramischen Material besteht.

## Beschreibung

### Technisches Gebiet

Die Erfindung betrifft eine Haftmittelzufuhrvorrichtung zum Versorgen einer Bearbeitungsmaschine mit Haftmittel nach dem Oberbegriff von Anspruch 1.

### Stand der Technik

Beispielsweise im Bereich der Möbelindustrie kommen verbreitet Werkstücke wie Möbelfronten, Korpusteile etc. zum Einsatz, die im Bereich ihrer Oberfläche mit einem Beschichtungsmaterial versehen sind, z. B. einer Kante oder einer Folie. Das Beschichtungsmaterial wird meist unter Einsatz eines Klebers (Haftmittels) an die Werkstücke in hierfür ausgelegten Maschinen wie Kantenanleimmaschinen angeleimt.

Der Kleber steht in der Maschine häufig in Form eines Granulats bereit, das von Anwendung erwärmt und verflüssigt werden muss. Zu diesem Zweck sind im Stand der Technik vielfältige Haftmittelzufuhrvorrichtungen bekannt. So offenbart beispielsweise die EP 1 115 542 B1 eine gattungsgemäße Vorrichtung mit einem Schmelzgitter zum Verflüssigen und Weiterleiten des Haftmittels. Das bekannte Schmelzgitter kann durch Aluminiumgussteile gebildet sein, in die elektrische Heizelemente eingegossen sind. Derartige Heizelemente sind häufig durch einen Heizdraht gebildet, der durch eine Schicht Isoliersand sowie eine Mantelfläche aus Stahl umgeben ist.

Obgleich sich die bekannten Haftmittelzufuhrvorrichtungen in der Praxis bewährt haben, sind sie mit einigen Nachteilen verbunden. Insbesondere benötigen die bekannten Haftmittelzufuhrvorrichtungen eine relativ lange Aufheizzeit des Haftmittels und regieren relativ träge auf veränderte Randbedingungen, wie beispielsweise des (Nach-)Füllstand an Haftmittel, wodurch es zum Verbrennen des Klebers aufgrund der langen Aufheizzeit kommen kann.

### Darstellung der Erfindung

Es ist daher Aufgabe der vorliegenden Erfindung, eine Haftmittelzufuhrvorrichtung der eingangs genannten Art bereitzustellen, die eine schnelle Erreichung und präzise Steuerung einer gewünschten Haftmitteltemperatur ermöglicht.

Diese Aufgabe wird erfindungsgemäß durch eine Haftmittelzufuhrvorrichtung nach dem Oberbegriff von Anspruch 1 gelöst. Besonders bevorzugte Weiterbildungen der Erfindung sind Gegenstand der abhängigen Ansprüche.

Der Erfindung liegt der Gedanke, einen besonders ungehinderten Wärmeübergang zwischen den Heizelementen der Haftmittelzufuhrvorrichtung und dem darin enthaltenen Haftmittel zu ermöglichen. Zu diesem Zweck ist erfindungsgemäß vorgesehen, dass bei einer gattungsgemäßen Haftmittelzufuhrvorrichtung das mindestens eine Heizelement zumindest abschnittsweise aus einem keramischen Material besteht. Durch den erfindungsgemäßen Einsatz von Keramik eröffnen sich völlig neue Möglichkeiten, die Heizelemente auszubilden und unmittelbar in des aufzuschmelzende Haftmittel einzubetten. Auf diese Weise lassen sich beispielsweise die Anzahl der Wärmeübergänge und die zu erwärmende Masse der Heizelemente deutlich verringern.

Daher kann das Haftmittel beträchtlich schneller erwärmt und die Haftmitteltemperatur erheblich präziser gesteuert werden. Hierdurch kann nicht nur schneller und stabiler der Betriebszustand erreicht werden, sondern es kann auch die in der Haftmittelzufuhrvorrichtung bevorratete Haftmittelmenge vermindert werden, da Haftmittelverluste in der Aufwärmphase oder Übergangsphasen minimiert werden. Nicht zuletzt besitzt die erfindungsgemäße Haftmittelzufuhrvorrichtung eine einfache Konstruktion.

Gemäß einer Weiterbildung der Erfindung ist vorgesehen, dass das mindestens eine Heizelement einen elektrisch leitfähigen und einen elektrisch isolierenden Abschnitt aufweist, der den elektrisch leitfähigen Abschnitt zumindest in einer Umfangsrichtung umgibt. Hierdurch wird ein Heizelement bereitgestellt, das ohne weitere Maßnahmen direkt verwendet werden kann, um die gitter- bzw. siebartige Struktur aufzubauen, welche unmittelbar in das aufzuschmelzende Haftmittel eingebettet ist. Allerdings ist zu beachten, dass das Heizelement je nach Anwendung dennoch eine zusätzliche Umhüllung wie eine dünne Edelstahlhülle aufweisen kann, ohne die Vorteile und Wirkungen der Erfindung wesentlich zu beeinträchtigen. Dabei ist es besonders bevorzugt, dass der elektrisch isolierende Abschnitt ein isolatorkeramisches Material aufweist, insbesondere Siliziumnitrid. Ein derartiges, isolatorkeramisches Material ermöglicht einen optimalen Kompromiss zwischen einer guten elektrischen Isolierung zwischen dem elektrisch leitfähigen Abschnitt und der Umgebung einerseits und einer guten Wärmeleitfähigkeit bzw. geringen Wärmeaufnahme andererseits, um die oben diskutierten Vorteile zu erzielen.

Alternativ oder zusätzlich ist gemäß einer Weiterbildung der Erfindung vorgesehen, dass der elektrisch leitfähige Abschnitt ein leiterkeramisches Material aufweist, insbesondere Aluminiumnitrid. Die Kombination eines leiterkeramischen Materials mit einem isolatorkeramischen Material ergibt ein besonders kompaktes, widerstandsfähiges und vor allem auch effizientes Heizelement, da der Wärmeübergang durch die ähnlichen Werkstoffe sehr schnell erfolgt.

Das Heizelement kann im Rahmen der vorliegenden Erfindung neben den oben diskutierten Bauteilen bzw. Abschnitten auch weitere Abschnitte aufweisen und beispielsweise auch aus bestimmten Gründen oder bestimmten Randbedingungen zusätzliche Umhüllungen besitzen, beispielsweise einen dünnen Stahlmantel. Gemäß einer Weiterbildung der vorliegenden Erfindung ist es jedoch bevorzugt, dass das mindestens eine Heizelement, insbesondere der isolatorkeramische Abschnitt, zumindest abschnittsweise in direktem Kontakt mit dem aufzuschmelzenden Haftmittel steht. Hierdurch lassen sich die oben unter Bezugnahme auf die allgemeine Zielrichtung der Erfindung diskutierten Vorteile besonders ausgeprägt erzielen.

Darüber hinaus ist gemäß einer Weiterbildung der Erfindung vorgesehen, dass das innere des Haftmittelvorratsbehälters und/oder das Innere eines stromabwärts der Haftmittelaufschmelzeinrichtung gelegenen Förderkanals zumindest abschnittsweise mit Teflon ausgekleidet ist. Hierdurch ergibt sich eine besonders kontinuierliche und störungsfreie Strömung und Bereitstellung des aufzuschmelzenden bzw. aufgeschmolzenen Haftmittels.

Gemäß einer besonders bevorzugten Ausführungsform besitzt die Haftmittelaufschmelzeinrichtung eine gitterartige und/oder siebartige Struktur. Auf diese Weise ist es besonders effizient möglich sicherzustellen, dass nur vollständig geschmolzenes Haftmittel die Haftmittelaufschmelzeinrichtung verlässt. Auf diese Weise kann besonders vorteilhaft eine Ausschussteilproduktion vermieden werden.

Alternativ oder zusätzlich können die Heizelemente so angeordnet sein, dass nur geschmolzenes Haftmittel die Heizeinrichtung verlassen kann. Zu diesem Zwecke können die Heizelemente beispielsweise so angeordnet sein, dass in der Umgebung der Ausflussöffnung des Haftmittelvorratsbehälters eine größere Anzahl an Heizelementen vorgesehen ist. Jedoch ist es auch möglich, in anderen Bereichen des Haftmittelvorratsbehälters die Heizelemente entsprechend so anzuordnen, dass nur vollständig aufgeschmolzenes Haftmittel den Haftmittelvorratsbehälter verlassen kann.

Gemäß einer weiteren Zielrichtung der Erfindung wird eine Anleimmaschine, insbesondere Kantenanleimmaschine, zum Anleimen von Beschichtungsmaterial an Werkstücke bereitgestellt. Die Anleimmaschine besitzt neben einer Einrichtung zum Zuführen des Beschichtungsmaterials zu dem Werkstück eine erfindungsgemäße Haftmittelzufuhrvorrichtung, die bei der Anleimmaschine einen schnellabrufbaren, zügigen und zuverlässigen Anleimbetrieb ermöglicht.

### Kurze Beschreibung der Zeichnungen

Fig. 1 zeigt eine Seitenansicht einer erfindungsgemäßen Haftmittelzufuhrvorrichtung,
Fig. 2 zeigt eine Schnittansicht von oben einer erfindungsgemäßen Haftmittelzufuhrvorrichtung,
Fig. 3 zeigt eine Ansicht der Heizelementanordnung von oben gemäß einer ersten Ausführungsform,
Fig. 4 zeigt eine Seitenansicht der Heizelementanordnung gemäß der ersten Ausführungsform,
Fig. 5 zeigt eine Seitenansicht der Heizelementanordnung gemäß einer zweiten Ausführungsform, und
Fig. 6 zeigt eine Ansicht der Heizelementanordnung von oben gemäß der ersten Ausführungsform.

### Ausführliche Beschreibung bevorzugter Ausführungsformen der Erfindung

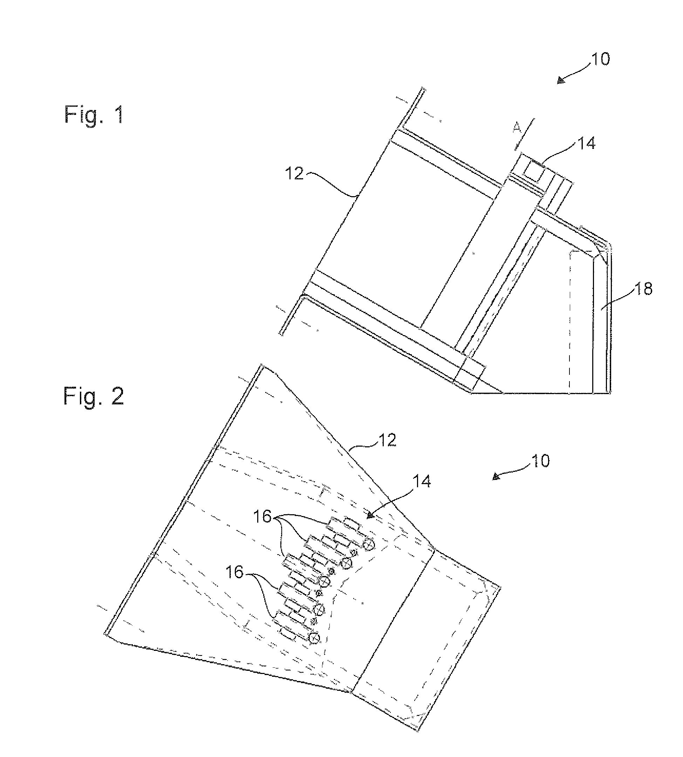

Eine erfindungemäße Haftmittelzufuhrvorrichtung 10 wird im Folgenden anhand rein beispielhafter Ausführungsformen unter Bezugnahme auf die Figuren 1-6 beschrieben.

Dabei zeigen Fig. 1 und 2 eine erfindungsgemäße Haftmittelzufuhrvorrichtung 10 zum Versorgen einer Bearbeitungsmaschine, insbesondere einer Kantenanleimmaschine, mit Haftmittel.

Die Haftmittelzufuhrvorrichtung 10 umfasst einen Haftmittelvorratsbehälter 12, in welchem Haftmittel, welches normalerweise in der Form von Haftmittelgranulat (im kalten Zustand) zur Verfügung gestellt wird, angeordnet ist. In dem Haftmittelvorratsbehälter 12 ist eine Haftmittelaufschmelzeinrichtung 14 angeordnet. Mit der Haftmittelaufschmelzeinrichtung 14 ist es möglich, in dem Haftmittelvorratsbehälter 12 bevorratetes Haftmittel aufzuschmelzen bzw. zu verflüssigen, so dass dieses beispielsweise zum Anleimen von Beschichtungsmaterial, insbesondere von Kanten, an Werkstücke (beispielsweise aus Holz, Holzwerkstoffen, Kunststoffen oder dergleichen) verwendet werden kann.

Bei herkömmlichen Haftmittelzufuhrvorrichtungen wird eine sehr lange Aufheizzeit benötigt, da die Heizeinrichtung sehr träge ist, da bei dieser im Regelfall ein Heizdraht eine Schicht ihn umgebenden isolierenden Sand aufwärmt und dieser Sand wiederum die Wärme an eine Mantelfläche aus Stahl weitergibt und diese Mantelfläche wiederum die Wärme an ein Aluminium weitergibt. Bedingt durch die vier Wärmeübergänge sind Vorlaufzeiten von fünf Minuten und mehr notwendig, um das Haftmittel zu verflüssigen. Dies hat zur Konsequenz, dass insbesondere in kleinen Betrieben die Haftmittelzufuhrvorrichtung stets eingeschaltet bleibt, so dass, wenn notwendig, unmittelbar mit dem Zuführen von Haftmittel begonnen werden kann.

Im Gegensatz dazu ist bei der erfindungsgemäßen Haftmittelzufuhrvorrichtung 10 die Haftmittelaufschmelzeinrichtung 14 mit einer Vielzahl von Heizelementen 16 versehen, die zumindest abschnittsweise aus einem keramischen Material bestehen und in direktem Kontakt mit dem Schmelzkleber stehen. Auf diese Weise wird ein direkter Kontakt mit dem Haftmittel hergestellt und die Kette beim Erwärmen des Haftmittels verkürzt sich wesentlich, so dass mit einem flüssigen Haftmittel bereits nach weniger als einer Minute gerechnet werden kann.

Die Heizelemente 16 sind dabei so in dem Haftmittelvorratsbehälter 12 anzuordnen, dass im kalten Zustand der Haftmittelzufuhrvorrichtung 10 verhindert wird, dass ein bevorratetes granulatförmiges Haftmittel unerwärmt aus dem Haftmittelvorratsbehälter 12 entfallen kann. Dazu können die aus einem keramischen Material bestehenden Heizelemente 14 entweder beispielsweise gitterförmig angeordnet sein oder so angeordnet sein, dass die Anordnung der Heizelemente 16 ein Hinabfallen von unerwärmtem Haftmittel verhindert.

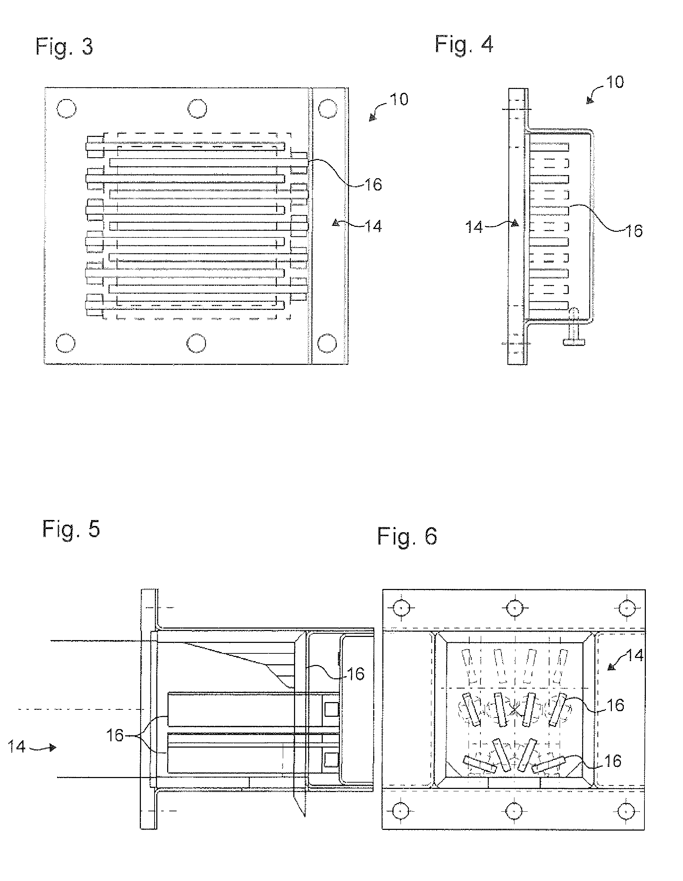

In diesem Zusammenhang zeigen beispielsweise Fig. 3 und 4 eine Anordnung der Heizeinrichtung, bei der zwölf Heizelemente 16 im Wesentlichen parallel und höhenversetzt zueinander angeordnet sind, so dass bedingt durch die Anordnung eine gute Durchwärmungen des Haftmittels rasch erzielt werden kann.

Ferner zeigen Fig. 5 und 6 eine Anordnung, bei der ebenfalls zwölf Heizelemente in Achslage zum Kolben im verschiedenen Winkeln angeordnet sind, wobei im oberen Bereich des Haftmittelvorratsbehälters 12 ein Keil 20 angeordnet ist, um einen ordentlichen Haftmittelfluss des erwärmten Haftmittels aus dem Haftmittelvorratsbehälter 12 sicherzustellen.

Um das Haftmittel ordentlich zu führen, ist im Auslassbereich des Haftmittelvorratsbehälters 12 ein Förderkanal 18 ausgebildet, der zumindest abschnittsweise mit Teflon verkleidet ist.

## Patentansprüche

1. Haftmittelzufuhrvorrichtung (10) zum Versorgen einer Bearbeitungsmaschine mit Haftmittel, umfassend:
einen Haftmittelvorratsbehälter (12) zum Bevorraten von Haftmittel,
einer Haftmittelaufschmelzeinrichtung (14) zum Aufschmelzen von in dem Haftmittelvorratsbehälter bevorratetem Haftmittel,
wobei die Haftmittelaufschmelzeinrichtung (14) mindestens ein Heizelement (16) aufweist,
**dadurch gekennzeichnet, dass**
die Haftmittelaufschmelzeinrichtung (14) in dem Haftmittel angeordnet ist und, dass
das mindestens eine Heizelement zumindest abschnittsweise aus einem keramischen Material besteht.

2. Haftmittelzufuhrvorrichtung nach Anspruch 1, **dadurch gekennzeichnet, dass** das mindestens eine Heizelement einen elektrisch leitfähigen Abschnitt und einen elektrisch isolierenden Abschnitt aufweist, der den elektrisch leitfähigen Abschnitt zumindest in einer Umfangsrichtung umgibt.

3. Haftmittelzufuhrvorrichtung nach Anspruch 2, **dadurch gekennzeichnet, dass** der elektrisch isolierende Abschnitt ein isolatorkeramisches Material aufweist, insbesondere Siliziumnitrid.

4. Haftmittelzufuhrvorrichtung nach Anspruch 2, **dadurch gekennzeichnet, dass** der elektrisch leitfähige Abschnitt ein leiterkeramisches Material aufweist, insbesondere Aluminiumnitrid.

5. Haftmittelzufuhrvorrichtung nach einem der vorhergehenden Ansprüche, **dadurch gekennzeichnet, dass** das mindestens eine Heizelement, insbesondere der isolatorkeramische Abschnitt, zumindest abschnittsweise in direktem Kontakt mit dem aufzuschmelzenden Haftmittel steht.

6. Haftmittelzufuhrvorrichtung nach einem der vorhergehenden Ansprüche, **dadurch gekennzeichnet, dass** das Innere des Haftmittelvorratsbehälters und/oder das Innere eines stromabwärts der Haftmittelaufschmelzeinrichtung gelegenen Förderkanals (18) zumindest abschnittsweise mit Teflon ausgekleidet ist.

7. Haftmittelzufuhrvorrichtung nach einem der vorhergehenden Ansprüche, **dadurch gekennzeichnet, dass** die Haftmittelaufschmelzeinrichtung (14) eine gitter- oder siebartige Struktur besitzt.

8. Haftmittelzufuhrvorrichtung nach einem der Ansprüche 1-6, **dadurch gekennzeichnet, dass** eine Vielzahl an Heizelementen (16) vorgesehen ist und die Heizelemente (16) so angeordnet sind, dass nur geschmolzenes Haftmittel den Haftmittelvorratsbehälter (12) verlassen kann.

9. Anleimmaschine, insbesondere Kantenanleimmaschine, zum Anleimen von Beschichtungsmaterial an Werkstücke, die bevorzugt zumindest teilweise aus Holz, Holzwerkstoffen, Kunststoffen oder dergleichen bestehen, mit:
einer Haftmittelzufuhrvorrichtung nach einem der vorhergehenden Ansprüche zum Zuführen von Haftmittel zu einer Oberfläche des Beschichtungsmaterials und/oder des Werkstücks, und
einer Einrichtung zum Zuführen des Beschichtungsmaterials zu dem Werkstück.
